# DEMANDE DE BREVET EUROPEEN

(11) **EP 1 114 581 A1**
(43) Date de publication de la demande: **11.07.2001**
(21) Numéro de dépôt: 01420001.8
(22) Date de dépôt: 05.01.2001
(51) Int. Cl.: A01J 25/15

(54) **Dispositif de pressage de fromages**

(30) Priorité: 05.01.2000 FR 0000093
(71) Demandeur: SEROBA, F-01540 Perrex (FR)
(72) Inventeur: Badet, Thierry, 01540 Perrex (FR); Despras, Alain, 69003 Lyon (FR)
(74) Mandataire: Myon, Gérard Jean-Pierre

(57) **Abrégé**

Ce dispositif comprend au moins un étage de réception (2) de fromages comportant des moyens (8) de réception de plusieurs fromages (66), ainsi qu'au moins un étage de pressage (30) comportant des moyens (44) de pressage des fromages disposés dans l'étage de réception (2) immédiatement inférieur à l'étage de pressage (30) considéré.

Ce dispositif comprend au moins un ensemble de réception (2) constituant un étage de réception et au moins un ensemble de pressage (30) constituant un étage de pressage, lesdits ensembles de réception (2) et de pressage (30) étant amovibles et étant disposés selon un empilement alterné. Ceci confère une grande modularité et une flexibilité d'utilisation satisfaisante à ce dispositif de pressage.

## Description

La présente invention a trait à un dispositif de pressage de fromages.

La fabrication d'un fromage fait intervenir une étape de pressage de ce dernier, en vue de son affinage, qui consiste à disposer sur le fromage à traiter un élément de poids déterminé, assurant un pressage par gravité.

A cet effet, on connaît, par FR-A-2 554 317, un dispositif de pressage de fromages, comprenant un châssis recevant plusieurs plateaux horizontaux, disposés les uns au-dessus des autres. Chaque plateau, qui supporte plusieurs moules de réception d'un fromage, est surmonté d'un ensemble de barres, sur lequel sont montés, à coulissement libre, des poids destinés au pressage d'un fromage correspondant. Il est par ailleurs prévu un système de tringlerie permettant la levée et l'abaissement, en une seule opération, de tous les ensembles de barres.

Ce dispositif de pressage présente certains inconvénients. En effet, sa structure est relativement complexe et fait appel à un nombre élevé d'organes mécaniques. Par ailleurs, il offre peu de flexibilité, dans la mesure où il ne peut être adapté à des cadences de fabrication différentes.

Afin de pallier ces inconvénients, l'invention se propose de réaliser un dispositif de pressage de fromages, dont la structure soit simple et qui puisse être adapté, de manière rapide et aisée, à différentes cadences de fabrication de ces fromages.

A cet effet, elle a pour objet un dispositif de pressage de fromages, comprenant au moins un étage de réception de fromages, comportant des moyens de réception de plusieurs fromages, ainsi qu'au moins un étage de pressage, comportant des moyens de pressage des fromages disposés dans l'étage de réception immédiatement inférieur à l'étage de pressage considéré, caractérisé en ce que ledit dispositif de pressage comprend au moins un ensemble de réception constituant un étage de réception et au moins un ensemble de pressage constituant un étage de pressage, lesdits ensembles de réception et de pressage étant amovibles et étant disposés selon un empilement alterné.

Selon d'autres caractéristiques de l'invention :
- le dispositif comporte des moyens d'immobilisation transversale de chaque ensemble de réception ou de pressage par rapport à chaque ensemble de pressage ou de réception adjacent ;
- lesdits moyens d'immobilisation transversale comportent un organe d'immobilisation d'un premier desdits ensembles de réception et de pressage, ledit organe faisant saillie axialement vers l'autre desdits ensembles et coopérant avec une face en regard de l'autre desdits ensembles ;
- chaque ensemble de réception et chaque ensemble de pressage comportent des moyens permettant leur préhension au sein dudit empilement ;
- lesdits moyens de préhension comportent un organe de préhension d'un premier desdits ensembles de réception et de pressage, ledit organe de préhension faisant saillie radialement vers l'extérieur, par rapport à une région adjacente de l'autre desdits ensembles ;
- chaque ensemble de réception et chaque ensemble de pressage comportent une partie centrale pourvue respectivement des moyens de réception et des moyens de pressage, ladite partie centrale étant bordée par une ceinture périphérique, la ceinture d'un premier desdits ensembles de réception et de pressage prenant appui sur la ceinture de l'autre desdits ensembles, au sein dudit empilement ;
- le dispositif comprend des moyens de passage du liquide libéré lors du pressage des fromages ;
- les moyens de passage comprennent des ouvertures ménagées dans chaque ensemble de réception, au voisinage de chaque moyen de réception, et des évidements ménagés dans chaque ensemble de pressage, à l'aplomb desdites ouvertures ;
- les ensembles de réception sont adaptés pour être empilés les uns sur les autres .
- les ensembles de pressage sont adaptés pour être empilés les uns sur les autres ;
- les moyens de pressage d'un même ensemble de pressage sont montés à coulissement libre de façon indépendante ;
- chaque élément de pressage comprend une coiffe d'appui sur un fromage, ladite coiffe possédant un rebord périphérique extérieur incurvé vers le bas.

L'invention va être décrite ci-dessous, en référence aux dessins annexés, donnés uniquement à titre d'exemples non limitatifs et dans lesquels :
- la figure 1 est une vue en perspective éclatée, avec arrachements, d'un ensemble de réception et d'un ensemble de pressage appartenant à un dispositif de pressage conforme à l'invention, et
- la figure 2 est une vue en coupe d'un empilement d'ensembles de réception et d'ensembles de pressage, analogues à ceux de la figure 1.

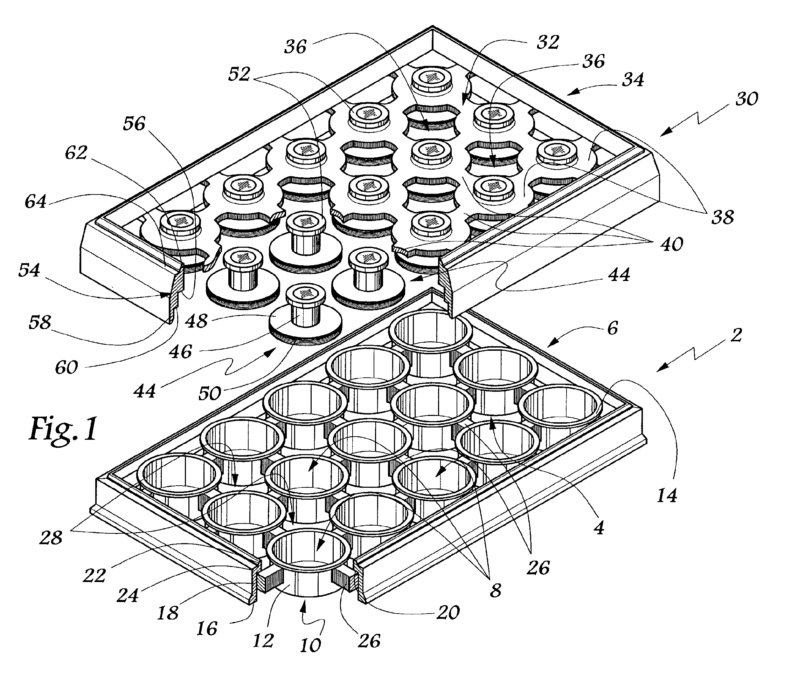

La figure 1 illustre un ensemble de réception de fromages, désigné dans son ensemble par la référence 2, qui est de forme générale rectangulaire et comprend une partie centrale 4 bordée par une ceinture 6. Cet ensemble de réception est réalisé d'un seul tenant, en matière plastique.

La partie centrale 4 comprend plusieurs alvéoles 8 de réception d'un fromage. Chaque alvéole est muni d'un fond 10 prolongé par des parois latérales cylindriques 12, qui sont terminées par un rebord périphérique extérieur 14.

La ceinture 6 comporte une embase 16 évasée, prolongée par une partie principale 18 comportant un épaulement rentrant 20. Une languette périphérique 22, qui fait saillie à partir de la face supérieure de la partie principale 18, délimite un rebord extérieur 24, formant siège de réception d'un ensemble de pressage, comme cela sera explicité dans ce qui suit.

Quatre ponts 26, qui s'étendent transversalement à partir de chaque alvéole 8, relient soit les alvéoles entre eux, soit les alvéoles à la ceinture périphérique, en se raccordant au voisinage de l'épaulement 20. Des ouvertures traversantes 28 sont délimitées par les alvéoles 8, les ponts 26 et, le cas échéant, la face intérieure de la ceinture 6.

La figure 1 illustre également un ensemble de pressage désigné dans son ensemble par la référence 30, qui comprend une partie centrale 32 bordée par une ceinture 34.

La partie centrale 32 comporte une plaque en matière plastique dans laquelle sont ménagés des évidements 36, disposés sensiblement à l'aplomb des ouvertures 28, une fois l'ensemble de pressage 30 empilé sur l'ensemble de réception 2. Ces évidements définissent des plages 38 globalement discoïdales, reliées entre elles par des ponts transversaux 40.

Chaque plage 38 est pourvue d'un orifice central dans lequel est monté, à coulissement libre, un élément de pressage 44 qui comprend une tige cylindrique 46, prolongée à son extrémité inférieure par une coiffe 48 pourvue d'un rebord périphérique 50 incurvé vers le bas. La tige 46 est munie d'une rondelle d'arrêt 52, propre à venir en butée contre la face supérieure de chaque plage 38. La tige 46 et la coiffe 48 peuvent être réalisées entièrement en acier inoxydable, ou bien encore en matière plastique, un organe de lestage métallique étant alors noyé dans cette tige.

La ceinture 34 comprend une partie principale 54 pourvue d'un épaulement rentrant 56. Une lèvre périphérique 58, faisant saillie vers le bas à partir de la périphérie extérieure de cette partie principale, définit une semelle 60 intérieure d'appui sur le siège 24.

Un bossage périphérique 62 s'étend vers le haut, à partir de la périphérie intérieure de la partie principale 54. Ce bossage 62 délimite un siège 64 périphérique extérieur propre à la réception de l'embase 16.

La mise en place d'un dispositif de pressage comprenant un empilement alterné d'ensembles de réception 2 et d'ensembles de pressage 30 est la suivante.

On introduit tout d'abord un fromage 66 dans chaque alvéole 8 d'un premier ensemble de réception 2. Puis, on rapporte, au moyen d'un organe de manutention non représenté, un ensemble de pressage 30 au-dessus de l'ensemble de réception 2 pourvu de ses fromages. Ces derniers font remonter chaque élément de pressage 44, par coulissement dans un orifice correspondant. On rapporte ensuite un ensemble supplémentaire de réception pourvu de ses fromages, sur lequel on dispose un ensemble de pressage supplémentaire, et ainsi de suite. Puis, chaque élément de pressage 44 redescend lentement par gravité, de manière à presser le fromage considéré.

Chaque ensemble de pressage 30 est empilé sur l'ensemble de réception 2 inférieur, par appui de la semelle 60 sur le siège 24, et reçoit l'ensemble de réception supérieur par appui de l'embase 16 sur le siège 64. La languette 22 permet, par coopération avec la face intérieure en regard de la ceinture 34, l'immobilisation transversale d'un ensemble de réception par rapport à l'ensemble de pressage immédiatement supérieur. Le bossage 62 assure, par coopération avec la face intérieure en regard de la ceinture 6, une immobilisation transversale de chaque ensemble de pressage par rapport à l'ensemble de réception immédiatement supérieur.

La dimension transversale de chaque coiffe 48 est très légèrement inférieure à celle de l'alvéole la recevant, de manière à définir un intervalle périphérique de passage du liquide libéré par le fromage, lors de son pressage. Ce liquide s'écoule au travers de micro perforations, non représentées, réalisées dans les parois latérales 12 des alvéoles et s'écoule également le long des parois latérales 12 et du rebord 14. Puis, il tombe par gravité au travers des ouvertures 28 et des évidements 36 ménagés à l'aplomb de ces dernières.

Après une première phase de pressage, il est nécessaire de retourner les fromages et donc de dépiler les ensembles de pressage 30 et les ensembles de réception 2. A cet effet, la lèvre 58, faisant saillie radialement vers l'extérieur par rapport à la ceinture 6, permet la préhension de chaque ensemble de pressage 30. Par ailleurs, la périphérie extérieure de l'embase 16, faisant saillie radialement vers l'extérieur par rapport à la ceinture 34, permet la préhension de chaque ensemble de réception 2 en vue de son dépilement.

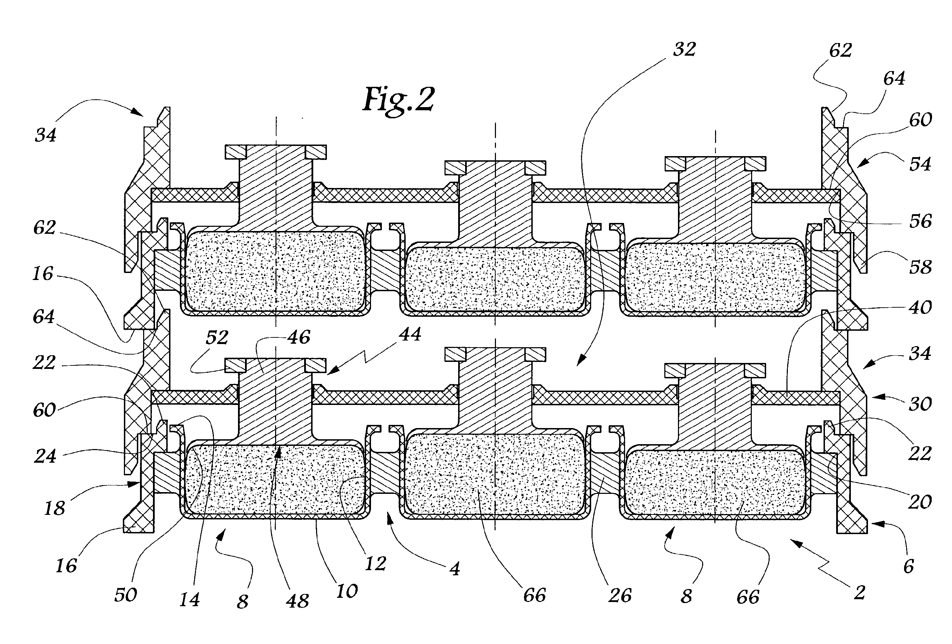

Puis, on extrait les fromages, manuellement ou au moyen d'un système à ventouse connu en soit, on les retourne et on les dispose à nouveau dans leurs alvéoles de réception. On reforme ensuite l'empilement initial, tel qu'illustré sur la figure 2, de façon à mener à bien la fin de l'opération de pressage. Une fois cette dernière achevée, les ensembles de réception 2 et de pressage 30 sont dépilés, les fromages pressés sont extrait des alvéoles 8 et les ensembles 2 et 30 sont lavés et stockés séparément. Le profil arrondi de chaque coiffe 48 confère une forme appropriée aux fromages une fois pressés.

Il est possible de réaliser un empilement formé uniquement par les ensembles de réception 2. Au sein de cet empilement, chaque ensemble de réception ou de pressage prend appui sur l'ensemble inférieur de pressage ou de réception. A cet effet, l'embase 16 d'un ensemble de réception supérieur prend appui sur le siège 24 de l'ensemble de réception inférieur, la languette 22 de l'élément inférieur coopérant avec la face intérieure de la ceinture de l'ensemble supérieur, en vue de leur immobilisation transversale.

Il est également possible de réaliser un empilement formé uniquement par des ensembles de pressage 30. Au sein d'un tel empilement, la semelle 60 de chaque ensemble de pressage 30 prend appui sur le siège 64 de l'ensemble inférieur, le bossage 62 de cet ensemble inférieur coopérant avec la face intérieure de la ceinture de l'ensemble supérieur, en vue de leur immobilisation transversale.

L'invention permet d'atteindre les objectifs précédemment mentionnés. Le dispositif de pressage conforme à l'invention offre une flexibilité remarquable, dans la mesure où il est possible d'adapter de façon simple et rapide ses dimensions verticales, et donc sa capacité de réception des fromages, en fonction des cadences de fabrication.

Les alvéoles de chaque ensemble de réception sont facilement accessibles par le haut, lorsque cet élément de réception est dépilé.

La mise en place du dispositif de l'invention peut être automatisée de façon aisée. Les moyens de préhension dont sont pourvus les ensembles de réception et de pressage permettent un dépilement aisé.

## Revendications

1. Dispositif de pressage de fromages (66), comprenant au moins un étage de réception (2) de fromages, comportant des moyens (8) de réception de plusieurs fromages (66), ainsi qu'au moins un étage de pressage (30), comportant des moyens (44) de pressage des fromages disposés dans l'étage de réception (2) immédiatement inférieur à l'étage de pressage (30) considéré, caractérisé en ce que ledit dispositif de pressage comprend au moins un ensemble de réception (2) constituant un étage de réception et au moins un ensemble de pressage (30) constituant un étage de pressage, lesdits ensembles de réception (2) et de pressage (30) étant amovibles et étant disposés selon un empilement alterné.

2. Dispositif selon la revendication 1, caractérisé en ce qu'il comporte des moyens d'immobilisation transversale de chaque ensemble de réception (2) ou de pressage (30) par rapport à chaque ensemble de pressage (30) ou de réception (2) adjacent.

3. Dispositif selon l'une des revendications 1 ou 2, caractérisé en ce que lesdits moyens d'immobilisation transversale comportent un organe d'immobilisation (22, 62) d'un premier (2, 30) desdits ensembles de réception et de pressage, ledit organe faisant saillie axialement vers l'autre (30, 2) desdits ensembles et coopérant avec une face (34, 6) en regard de l'autre desdits ensembles.

4. Dispositif selon l'une des revendications 1 à 3, caractérisé en ce que chaque ensemble de réception (2) et chaque ensemble de pressage (30) comportent des moyens (16, 58) permettant leur préhension au sein dudit empilement.

5. Dispositif selon la revendication 4, caractérisé en ce que lesdits moyens de préhension comportent un organe de préhension (16, 58) d'un premier (2, 30) desdits ensembles de réception et de pressage, ledit organe de préhension faisant saillie radialement vers l'extérieur, par rapport à une région adjacente (34, 6) de l'autre (30, 2) desdits ensembles.

6. Dispositif selon l'une des revendications 1 à 5,
caractérisé en ce que chaque ensemble de réception (2) et chaque ensemble de pressage (30) comportent une partie centrale (4, 32) pourvue respectivement des moyens de réception (8) et des moyens de pressage (44), ladite partie centrale (4, 32) étant bordée par une ceinture périphérique (6, 34), la ceinture (6, 34) d'un premier (2, 30) desdits ensembles de réception et de pressage prenant appui sur la ceinture (34, 6) de l'autre (30, 2) desdits ensembles, au sein dudit empilement.

7. Dispositif selon l'une des revendications 1 à 6, caractérisé en ce qu'il comprend des moyens (28, 36) de passage du liquide libéré lors du pressage des fromages.

8. Dispositif selon la revendication 7, caractérisé en ce que les moyens de passage comprennent des ouvertures (28) ménagées dans chaque ensemble de réception (2), au voisinage de chaque moyen de réception (8), et des évidements (36) ménagés dans chaque ensemble de pressage (30), à l'aplomb desdites ouvertures (28).

9. Dispositif selon l'une quelconque des revendications précédentes, caractérisé en ce que les ensembles de réception (2) sont adaptés pour être empilés les uns sur les autres.

10. Dispositif selon l'une quelconque des revendications précédentes, caractérisé en ce que les ensembles de pressage (30) sont adaptés pour être empilés les uns sur les autres.

11. Dispositif selon l'une quelconque des revendications précédentes, caractérisé en ce que les moyens de pressage (44) d'un même ensemble de pressage (30) sont montés à coulissement libre de façon indépendante.

12. Dispositif selon l'une quelconque des revendications précédentes, caractérisé en ce que chaque élément de pressage comprend une coiffe (48) d'appui sur un fromage (66), ladite coiffe possédant un rebord périphérique (50) extérieur incurvé vers le bas.
